(19) Europäisches Patentamt
European Patent Office
Office européen des brevets

(11) EP 4 465 318 A1

(12) EUROPEAN PATENT APPLICATION

(43) Date of publication:
**20.11.2024 Bulletin 2024/47**

(21) Application number: **23173782.6**

(22) Date of filing: **16.05.2023**

(51) International Patent Classification (IPC):
***H01G 9/00*** *(2006.01)* ***H01G 9/028*** *(2006.01)*
*H01G 9/042* *(2006.01)* *H01G 9/15* *(2006.01)*
*C08G 61/12* *(2006.01)* *H01B 1/12* *(2006.01)*
*H01G 11/48* *(2013.01)*

(52) Cooperative Patent Classification (CPC):
**H01G 9/0036; C08G 61/12; C08G 61/126; C08L 65/00; C09D 165/00; H01B 1/127; H01G 9/028;** C08G 2261/1424; C08G 2261/3223; C08G 2261/794; H01G 9/0425; H01G 9/15; H01G 11/48

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Heraeus Epurio GmbH**
**63450 Hanau (DE)**

(72) Inventors:
- **Lövenich, Wilfried**
  **51368 Leverkusen (DE)**
- **Merker, Udo**
  **51368 Leverkusen (DE)**
- **Elschner, Andreas**
  **51368 Leverkusen (DE)**
- **Sautter, Armin**
  **51368 Leverkusen (DE)**

(74) Representative: **Herzog IP Patentanwalts GmbH**
**Steinstraße 16-18**
**40212 Düsseldorf (DE)**

# (54) PEDOT-DISPERSION WITH HIGH NUMBER OF PARTICLES

(57) The present invention relates to a dispersion comprising
**i)** a dispersant;
**ii)** at least one polythiophene dispersed in the dispersant **i);**
wherein the dispersion comprises particles that have a particle size of 1.5 μm or more, the total number of these particles being in the range from 20,000 to 1,000,000 per ml; and
wherein a conductive layer prepared from the dispersion has a surface roughness Rq in the range from 4 to 23 nm.

The invention also relates to a process for the preparation of a dispersion, to a dispersion obtainable by that process, to a process for the preparation of a layered body, to a layered body obtainable by that process and to the use of a dispersion for the formation of a polymeric outer layer in a capacitor.

Fig. 2

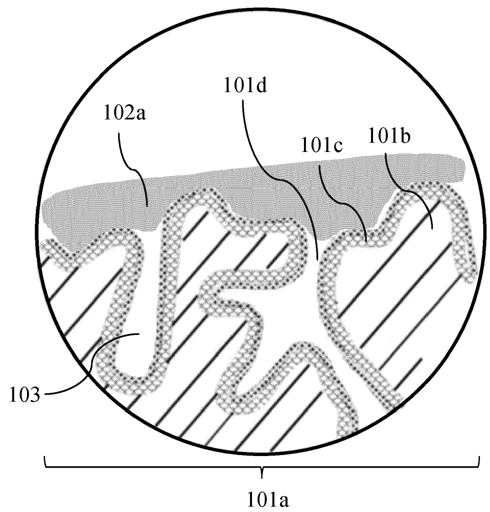


EP 4 465 318 A1

## Description

## FIELD OF THE INVENTION

The present invention relates to a dispersion comprising a dispersant and at least one polythiophene dispersed in the dispersant, to a process for the preparation of a dispersion, to a dispersion obtainable by that process, to a process for the preparation of a layered body, to a layered body obtainable by that process and to the use of a dispersion for the formation of a polymeric outer layer in a capacitor.

## BACKGROUND OF THE INVENTION

A standard electrolytic capacitor generally consists of a porous metal electrode, an oxide layer disposed on the metallic surface, an electrically conductive material, generally a solid, which is introduced into the porous structure, an external electrode (contact), such as a silver layer, and other electrical contacts and an encapsulation. One frequently used electrolytic capacitor is the tantalum electrolytic capacitor, of which the anode electrode is made from the valve metal tantalum, on which a uniform, dielectric layer of tantalum pentoxide has been produced through anodic oxidation (also referred to as "*forming*"). A liquid or solid electrolyte forms the cathode of the capacitor. Aluminium capacitors, of which the anode electrode is made from the valve metal aluminium, on which a uniform, electrically insulating aluminium oxide layer is produced as a dielectric by means of anodic oxidation, are also frequently used. Here also, a liquid electrolyte or a solid electrolyte form the cathode of the capacitor. The aluminium capacitors are generally embodied as wound capacitors or stack-type capacitors.

In view of their high electrical conductivity, π-conjugated polymers are particularly suitable as solid electrolytes in the capacitors described above. π-conjugated polymers are also referred to as conductive polymers or as synthetic metals. They are gaining increasing commercial significance because, by comparison with metals, polymers have advantages with regard to processing, weight and the selective adjustment of properties through chemical modification. Examples of known π-conjugated polymers include polypyrroles, polythiophenes, polyanilines, polyacetylenes, polyphenylenes and poly(p-phenylene-vinylenes), wherein poly(3,4-ethylene-dioxythiophene) (PEDOT) is a particularly important polythiophene which is used technically, because it has a very high conductivity in its oxidised form.

In addition to a low equivalent series resistance (ESR), modern electrolytic capacitors require a low leakage current and good stability with respect to external stresses. High mechanical stresses that may greatly increase the leakage current of the capacitor anode occur in particular during the production process when encapsulating the capacitor anodes.

Stability toward such stresses and therefore a low leakage current may primarily be achieved by an approximately 5 to 50 μm thick outer layer made of conductive polymers on the capacitor anode. Such a layer is used as a mechanical buffer between the capacitor anode and the cathode-side electrode. This prevents the silver layer (contacting), for example when mechanically stressed, from coming into direct contact with the dielectric or from damaging it and thus increasing the leakage current of the capacitor.

In the prior art, PEDOT/PSS-dispersions have not only been used for the formation of a solid electrolyte layer, but also for the formation of a polymeric outer layer to be applied on top of the solid electrolyte layer. DE-A-10 2005 033 839, for example, discloses the use of a dispersion comprising particles of a conductive polymer and a binder for the formation of a polymeric outer layer, wherein the proportion of the particles of the conductive polymer in the dispersion having a diameter of less than 700 nm forms a solids content of at least 5% by weight of the solids content of the dispersion, and wherein the dispersion additionally comprises solid particles having a diameter in the range from 0.7 to 20 μm.

However, it has been observed that the leakage current of solid electrolyte capacitors the polymeric outer layers of which have been prepared using PEDOT/PSS-based dispersions such as those disclosed in DE-A-10 2005 033 839 is for certain applications often too high.

The present invention was based on the object of overcoming the disadvantages resulting from the prior art in connection with capacitors, preferably in connection with solid electrolytic capacitors, more preferably in connection with capacitors known from the prior art that comprise a polymeric outer layer on top of a solid electrolyte layer, wherein the polymeric outer layer is based on π-conjugated polymers such a PEDOT, even more preferably in connection with capacitors known from the prior art that comprise a polymeric outer layer based on PEDOT/PSS.

In particular, the present invention was based on the object of providing dispersions comprising at least one polythiophene, preferably dispersions comprising a complex of a polythiophene and a polyanion, more preferably dispersions comprising a PEDOT/PSS-complex, that are particularly useful for the preparation of a polymeric outer layer in capacitors that are characterized by a low leakage current.

It was also an object of the present invention to provide a process by means of which such advantageous dispersions can be prepared. The process for the preparation of the advantageous dispersion should be characterized

in that it allows the manufacture of these dispersions in the simplest possible manner, in particular with the fewest possible process steps.

Moreover, it was an object of the present invention to provide a process for the preparation of a layered body, preferably for the preparation of an electrolyte capacitor, wherein the electrolyte capacitor compared to electrolyte capacitors known from the prior art is characterized by a reduced leakage current.

## SUMMARY OF THE INVENTION

A contribution to at least partly solving at least one, preferably more than one, of the above objects is made by the independent claims. The dependent claims provide preferred embodiments which contribute to at least partly solving at least one of the objects.

**|1a|** A contribution to solving at least one of the objects according to the invention is made by a $1^{st}$ embodiment of a dispersion comprising

**i)** a dispersant (also referred to as a "*dispersing agent*");

**ii)** at least one polythiophene dispersed in the dispersant **i)**;

wherein the dispersion comprises particles that have a particle size of 1.5 μm or more, the total number of these particles being in the range from 20,000 (*i.e.* $2 \times 10^4$) to 1,000,000 per ml, preferably in the range from 50,000 to 900,000 per ml, more preferably in the range from 75,000 to 900,000 per ml and even more preferably in the range from 100,000 to 900,000 per ml; and

wherein a conductive layer prepared from the dispersion has a surface roughness Rq in the range from 4 to 23 nm, preferably in the range from 4 to 20 nm, more preferably in the range from 4 to 15 nm and even more preferably in the range from 4 to 10 nm.

The term "*dispersion*" as used in context with the present invention general refers to any liquid composition in which a polythiophene, for example a polythiophene that is part of a complex comprising the polythiophene and a polyanion, is somehow distributed in a homogeneous phase that is formed by the liquid dispersant **i)** (dispersant **i)** thus forms the liquid phase of the dispersion). It should be noted that transitions between a "*dispersion*" and a "*solution*" can be fluid. For that reason, no distinction is made hereafter between the terms "*dispersed*" and "*dissolved*". Likewise, no distinction is made between "*dispersion*" and "*solution*" or between "*dispersant*" and "*solvent*". Rather these terms are used synonymously hereafter.

**|2a|** According to a preferred embodiment of the dispersion according to the invention, the dispersion comprises more than 1,500 particles per ml that have a particle size of 10 μm or more, preferably more than 2,000 particles per ml, more preferably more than 3,000 particles per ml and even more preferably more than 5,000 particles per ml. This preferred embodiment is a $2^{nd}$ embodiment of the dispersion according to the present invention, that preferably depends on the $1^{st}$ embodiment.

**|3a|** According to a further preferred embodiment of the dispersion according to the invention, the polythiophene **ii)** is present in the form of particles of a complex comprising the polythiophene and a polyanion and wherein the number and the size of the particles defined in the $1^{st}$ and the $2^{nd}$ embodiment of the dispersion according to the present invention refers to the number and the size of the particles of a complex comprising the polythiophene and a polyanion. This preferred embodiment is a $3^{rd}$ embodiment of the dispersion according to the present invention, that preferably depends on the $1^{st}$ or the $2^{nd}$ embodiment.

**|4a|** According to a preferred embodiment of the dispersion according to the invention, the dispersant **i)** comprises water. Preferably, dispersant **i)** comprises water in an amount of at least 50 wt.-%, more preferably at least 65 wt.-%, even more preferably at least 70 wt.-% and most preferably at least 80 wt.-%, in each case based on the total weight of the dispersion. This preferred embodiment is a $4^{th}$ embodiment of the dispersion according to the present invention, that preferably depends on any of the $1^{st}$ to the $3^{rd}$ embodiment.

**|5a|** According to a further preferred embodiment of the dispersion according to the invention, the at least one polythiophene **ii)** is a foreign-doped polythiophene, such as a cationic polythiophene that is present in the form of a polythiophene/polyanion-complex, more preferably in the form of a PEDOT/PSS-complex, a self-doped polythiophene, such as poly(4-[(2,3-dihydrothieno-[3,4-b]-[1,4]dioxin-2-yl)methoxy]propane-1-sulfonic acid), poly(4-[(2,3-dihydro-thieno-[3,4-b][1,4]dioxin-2-yl)methoxy]butane-1-sulfonic acid) (PEDOT-S) or poly-(4-[(2,3-dihydrothieno[3,4-b][1,4]dioxin-2-yl)methoxy]butane-2-sulfonic acid), or a mixture thereof. This preferred embodiment is a 5$^{th}$ embodiment of the dispersion according to the present invention, that preferably depends on any of the 1$^{st}$ to the 4$^{th}$ embodiment.

**|6a|** According to a further preferred embodiment of the dispersion according to the invention, the at least one polythiophene **ii)** is present in the form of particles of a complex comprising the at least one polythiophene **ii)** and a polyanion. This preferred embodiment is a 6$^{th}$ embodiment of the dispersion according to the present invention, that preferably depends on any of the 1$^{st}$ to the 5$^{th}$ embodiment.

**|7a|** According to a further preferred embodiment of the dispersion according to the invention, the at least one polythiophene **ii)** is present in the form of particles of a complex comprising the at least one polythiophene **ii)** and a polyanion, wherein the polythiophene is poly(3,4-ethylenedioxythiophene) and the polyanion is an anion of polystyrene sulfonic acid. The complex of the polythiophene and the polyanion is thus preferably a PEDOT/PSS-complex. This preferred embodiment is a 7$^{th}$ embodiment of the dispersion according to the present invention, that preferably depends on any of the 1$^{st}$ to the 6$^{th}$ embodiment.

**|8a|** According to a further preferred embodiment of the dispersion according to the invention, the at least one polythiophene **ii)** is present in the form of particles of a complex comprising the at least one polythiophene **ii)** and a polyanion, preferably in the form of particles comprising PEDOT/PSS, wherein the dispersion comprises the polyanion and the polythiophene in a weight ratio polyanion : polythiophene in the range from of 0.5 : 1 to 30 : 1, preferably in the range from of 0.8 : 1 to 15 : 1, more preferably in the range from 1 : 1 to 10 : 1, even more preferably in the range from 1.2 : 1 to 8 : 1 and most preferably in the range from 1.4 : 1 to 4 : 1. The weight of the polythiophene in this context corresponds to the weighed amount of the thiophene monomers used for the preparation of the polythiophene, on the assumption that a complete conversion takes place during the polymerisation. This preferred embodiment is an 8$^{th}$ embodiment of the dispersion according to the present invention, that preferably depends on any of the 1$^{st}$ to the 7$^{th}$ embodiment.

**|9a|** According to a further preferred embodiment of the dispersion according to the invention, the at least one polythiophene **ii)** is present in the form of particles of a complex comprising the at least one polythiophene **ii)** and a polyanion, preferably in the form of particles comprising PEDOT/PSS, wherein the weight average diameter ($\mathbf{d_{50}}$) as determined by ultra-centrifuge measurement of these particles is in the range from 10 nm to 500 nm, more preferably in the range from 20 nm to 400 nm, even more preferably in the range from 30 nm to 300 nm and most preferably in the range from 40 nm to 300 nm. This preferred embodiment is a 9$^{th}$ embodiment of the dispersion according to the present invention, that preferably depends on any of the 1$^{st}$ to the 8$^{th}$ embodiment.

|10a| According to a further preferred embodiment of the dispersion according to the invention, the at least one polythiophene **ii)** is present in the form of particles of a complex comprising the at least one polythiophene **ii)** and a polyanion, preferably in the form of particles comprising PEDOT/PSS, wherein the dispersion has a $\mathbf{d_{90}}$-value of the diameter distribution of these particles as determined by ultra-centrifuge measurement of less than 1,000 nm, preferably less than 800 nm, more preferably less than 600 nm and most preferably less than 500 nm. This preferred embodiment is a 10$^{th}$ embodiment of the dispersion according to the present invention, that preferably depends on any of the 1$^{st}$ to the 9$^{th}$ embodiment.

**|11a|** According to a further preferred embodiment of the dispersion according to the invention, the at least one polythiophene **ii)** is present in the form of particles of a complex comprising the at least one polythiophene **ii)** and a polyanion, preferably in the form of particles comprising PEDOT/PSS, wherein the dispersion has a $\mathbf{d_{10}}$-value of the diameter distribution of these particles as determined by ultra-centrifuge measurement of greater than 2 nm, preferably greater than 5 nm, more preferably greater than 10 nm and most preferably greater than 20 nm. This preferred embodiment is an 11$^{th}$ embodiment of the dispersion according to the present invention, that preferably depends on any of the 1$^{st}$ to the 10$^{th}$ embodiment.

**|12a|** According to a further preferred embodiment of the dispersion according to the invention, the dispersion has a solids content of at least 1 wt.-%, preferably of at least 1.4 wt.-%, more preferably of at least 1.6 wt.-%, even more preferably of at least 1.8 wt.-% and most preferably of at least 2.0 wt.-%, in each case based on the total weight of the dispersion. This preferred embodiment is a 12$^{th}$ embodiment of the dispersion according to the present invention, that preferably depends on any of the 1$^{st}$ to the 11$^{th}$ embodiment.

**|13a|** According to a further preferred embodiment of the dispersion according to the invention, the dispersion has a pH-value (determined at 25°C) in the range from 1 to 8.0, preferably in the range from 1.5 to 7 and more preferably in the range from 2.5 to 6. This preferred embodiment is a 13th embodiment of the dispersion according to the present invention, that preferably depends on any of the 1st to the 12th embodiment.

**|14a|** According to a further preferred embodiment of the dispersion according to the invention, a conductive layer prepared from the dispersion has a conductivity of at least 10 S/cm, preferably at least 50 S/cm, more preferably at least 100 S/cm and most preferably at least 200 S/cm as determined by the test method disclosed herein (*i. e.*, by a test method in which the conductivity of a conductive layer is determined for a dispersion that is obtained after 19 g of the dispersion according to the present invention have been supplemented with 1 g DMSO). This preferred embodiment is a 14th embodiment of the dispersion according to the present invention, that preferably depends on any of the 1st to the 13th embodiment.

**|15a|** According to a further preferred embodiment of the dispersion according to the invention, the at least one polythiophene **ii)** is present in the form of particles of a complex comprising the at least one polythiophene **ii)** and a polyanion, preferably in the form of particles comprising PEDOT/PSS, wherein the dispersion comprises the polythiophene and the polyanion in a total amount (*i.e.*, the amount of polythiophene plus the amount of polyanion) of at least 1 wt.-%, preferably of at least 1.4 wt.-%, more preferably of at least 1.6 wt.-%, even more preferably of at least 1.7 wt.-% and most preferably of at least 1.8 wt.-%, in each case based on the total weight of the dispersion. This preferred embodiment is a 15th embodiment of the dispersion according to the present invention, that preferably depends on any of the 1st to the 14th embodiment.

**|16a|** According to a further preferred embodiment of the dispersion according to the invention, the dispersion further comprises

> **iii)** at least one additive, wherein the at least one additive is an additive selected from the group consisting of a binder, a pH-regulator, a crosslinker, an adhesion promoter, a conductivity improver, a surfactant, a stabilizer and a combination of at least two of these additives.

This preferred embodiment is a 16th embodiment of the dispersion according to the present invention, that preferably depends on any of the 1st to the 15th embodiment.

**|17a|** According to a further preferred embodiment of the dispersion according to the invention, the dispersion further comprises as an additive

> **iii)** at least one organic binder, preferably at least one organic binder selected from the group consisting of polyolefins, polyvinyl acetate, polycarbonate, polyvinyl butyral, polyacrylic acid esters, polyacrylic acid amides, polymethacrylic acid esters, polymethacrylic acid amides, polystyrene, polyacrylonitrile, polyvinyl chloride, polyvinyl pyrrolidones, polybutadiene, polyisoprene, polyethers, polyesters, polyurethanes, polyamides, polyimides, polysulphones, polysilicones, epoxy resins, styrene-acrylate, vinyl acetate/acrylate and ethylene/vinyl acetate copolymers, polyvinyl alcohols or cellulose derivatives and mixtures thereof.

Preferably, the dispersion comprises the organic binder in an amount in the range from 0.1 to 20 wt.-%, preferably in the range from 0.5 to 15 wt.-%, more preferably in the range from 1 to 10 wt.-% and even more preferably in the range from 1 to 5 wt.-%, in each case based on the total weight of the dispersion. This preferred embodiment is a 17th embodiment of the dispersion according to the present invention, that preferably depends on the 16th embodiment.

**|18a|** According to a further preferred embodiment of the dispersion according to the invention, the dispersion has a viscosity (measured with a rheometer at 20°C and a shear rate of 100 $s^{-1}$) in the range from 1 to 1000 mPa×s, preferably in the range from 5 to 750 mPa×s, more preferably in the range from 10 to 500 mPa×s and most preferably in the range from 20 to 300 mPa×s. This preferred embodiment is an 18th embodiment of the dispersion according to the present invention, that preferably depends on any of the 1st to the 17th embodiment.

**|1b|** A contribution to solving at least one of the objects according to the invention is also made by a 1st embodiment of a process 1 for the preparation of a dispersion comprising the steps:

> **I)** providing a dispersion comprising

**i)** a dispersant;

**ii)** at least one polythiophene dispersed in the dispersant **i)**;

by polymerizing thiophene monomers in the presence of the dispersant **i)**;
**II)** adjusting the size of particles that have a particle size of 1.5 μm or more in the dispersion provided in process step **I)** to be in the range from 20,000 to 1,000,000 per ml, preferably in the range from 50,000 to 900,000 per ml, more preferably in the range from 75,000 to 900,000 per ml and even more preferably in the range from 100,000 to 900,000 per ml.

**|2b|** According to a preferred embodiment of process 1 according to the invention, the dispersant **i)** comprises water. Preferably, dispersant **i)** comprises water in an amount of at least 50 wt.-%, more preferably at least 65 wt.-%, even more preferably at least 70 wt.-% and most preferably at least 80 wt.-%, in each case based on the total weight of the dispersion. This preferred embodiment is a 2$^{nd}$ embodiment of process 1 according to the present invention, that preferably depends on the 1$^{st}$ embodiment.

**|3b|** According to a further preferred embodiment of process 1 according to the invention, the thiophene monomer is polymerized in the presence of the dispersant **i)** and in the presence of a polyanion to obtain a dispersion comprising a complex of a polythiophene and the polyanion. This preferred embodiment is a 3$^{rd}$ embodiment of process 1 according to the present invention, that preferably depends on the 1$^{st}$ or the 2$^{nd}$ embodiment.

**|4b|** According to a further preferred embodiment of process 1 according to the invention, the thiophene monomer is polymerized in the presence of the dispersant **i)** and in the presence of a polyanion to obtain a dispersion comprising a complex of a polythiophene and the polyanion, wherein the thiophene monomer is 3,4-ethylenedioxythiophene and the polyanion is an anion of polystyrene sulfonic acid. The complex of the polythiophene and the polyanion is thus preferably a PEDOT/PSS-complex. This preferred embodiment is a 4$^{th}$ embodiment of process 1 according to the present invention, that preferably depends on any of the 1$^{st}$ to the 3$^{rd}$ embodiment.

**|5b|** According to a further preferred embodiment of process 1 according to the invention, adjustment of the number of particles that have a particle size of 1.5 μm or more in the dispersion provided in process step **I)** is accomplished by means of a process comprising the process steps:

**IIa)** subjecting the dispersion obtained in process step **I)** to a first filtration step, wherein the dispersion is filtered through a filter having a cut off size in the range from 100 to 150 μm, preferably in the range from 120 to 130 μm;

**IIb**) subjecting the dispersion obtained in process step **IIa)** to a further filtration step, wherein the dispersion is filtered through a filter having a cut off size in the range from 1 to 50 μm, preferably in the range from 5 to 15 μm, wherein this filtration is preferably performed under a pressure of not more than 1 bar, preferably not more than 0.8 bar, more preferably not more than 0.6 bar, even more preferably not more than 0.4 bar and most preferably not more than 0.2 bar.

This preferred embodiment is a 5$^{th}$ embodiment of process 1 according to the present invention, that preferably depends on any one of the 1$^{st}$ to the 4$^{th}$ embodiment.

**|6b|** According to a further preferred embodiment of process 1 according to the invention, adjustment of the number of particles that have a particle size of 1.5 μm or more in the dispersion provided in process step **I)** is accomplished by means of a process comprising the process steps:

**IIa)** separating a part, preferably 80 to 94 wt.-%, more preferably 88 to 92 wt.-%, of the dispersion obtained in process step **I)** from the dispersion, and subjecting this separated part to at least 8, preferably of at least 10, high-pressure homogenization steps performed at a pressure of at most 2000 bar, preferably at a pressure of at most 1,500 bar, followed by a filtration step, wherein the dispersion is filtered through a filter having a cut off size in the range 3 to 8 μm preferably 4 to 5μm;

**IIb)** subjecting the remaining part of the dispersion provided in process step **I)** in which the ion-exchange resin is removed by a 400 μm filter.

**IIc)** re-combining the thus obtained filtered parts of the dispersion.

This preferred embodiment is a $6^{th}$ embodiment of process 1 according to the present invention, that preferably depends on any one of the $1^{st}$ to the $4^{th}$ embodiment.

**|1c|** A contribution to solving at least one of the objects according to the invention is also made by a dispersion obtainable by process 1 according to the present invention, preferably by process 1 according to any of its $1^{st}$ to the $6^{th}$ embodiment. Preferably, this dispersion has the same properties as the dispersion according to the present invention, preferably as the dispersion according to the present invention as defined in any of its $1^{st}$ to the $18^{th}$ embodiment.

**|1d|** A contribution to solving at least one of the objects according to the invention is also made by a $1^{st}$ embodiment of a process 2 for the preparation of a layered body, comprising the process steps:

**A)** provision of a substrate ;

**B)** application of the dispersion according to the present invention, preferably of the dispersion according to the present invention as defined in any of its $1^{st}$ to the $18^{th}$ embodiment, or of a dispersion obtainable by process 1 according to the present invention, preferably by process 1 as defined in any of its $1^{st}$ to the $6^{th}$ embodiment, onto at least a part of the surface of this substrate;

**C)** at least partial removal of the dispersant **i)** to obtain a layered body comprising an electrically conductive layer coated onto at least a part of the surface of the substrate.

**|2d|** According to a preferred embodiment of process 2 according to the invention, the layered body is part of a electrolyte capacitor, wherein the substrate is a porous electrode body made of an electrode material, wherein a dielectric layer at least partially covers a surface of this electrode material, wherein a solid electrolyte layer at least partially covers a surface of the dielectric layer and wherein the electrically conductive layer is a polymeric outer layer that at least partially covers a surface of the solid electrolyte layer. This preferred embodiment is a $2^{nd}$ embodiment of process 2 according to the present invention, that preferably depends on the $1^{st}$ embodiment.

**|3d|** According to a preferred embodiment of process 2 according to the invention, the process comprises the steps of:

**A)** provision of a porous electrode body made of an electrode material, wherein a dielectric layer at least partially covers a surface of this electrode material and wherein a solid electrolyte layer at least partially covers a surface of the dielectric layer;

**B)** application of the dispersion according to the present invention, preferably of the dispersion according to the present invention as defined in any of its $1^{st}$ to the $18^{th}$ embodiment, or of a dispersion obtainable by process 1 according to the present invention, preferably by process 1 as defined in any of its $1^{st}$ to the $6^{th}$ embodiment, onto at least a part of the surface of the solid electrolyte layer;

**C)** at least partial removal of the dispersant **i)** for the formation of a polymeric outer layer that at least partially covers a surface of the solid electrolyte layer.

This preferred embodiment is a $3^{rd}$ embodiment of process 2 according to the present invention, that preferably depends on the $1^{st}$ or the $2^{nd}$ embodiment.

**|4d|** According to a further preferred embodiment of process 2 according to the invention, the layered body is an aluminum capacitor or a tantalum capacitor. This preferred embodiment is a $4^{th}$ embodiment of process 2 according to the present invention, that preferably depends to any of its $1^{st}$ to the $3^{rd}$ embodiment.

**|1e|** A contribution to solving at least one of the objects according to the invention is also made by a layered body obtainable by process 2 according to the present invention, preferably by process 2 according to any of its $1^{st}$ to the $4^{th}$ embodiment.

**|1f|** A contribution to solving at least one of the objects according to the invention is also made by the use of the dispersion according to the present invention, preferably of the dispersion according to the present invention as defined in any of its $1^{st}$ to the $18^{th}$ embodiment, or of a dispersion obtainable by process 1 according to the present invention, preferably by process 1 as defined in any of its $1^{st}$ to the $6^{th}$ embodiment, for the formation of a polymeric

outer layer in a capacitor.

**|2f|** According to a preferred embodiment of the use according to the invention, the capacitor is an aluminum capacitor or a tantalum capacitor. This preferred embodiment is 2nd embodiment of the use according to the present invention, that preferably depends on the 1st embodiment.

## DETAILED DESCRIPTION

Polythiophenes

The dispersion according to the present invention comprises a dispersant and at least one polythiophene dispersed in the dispersant.

Preferred polythiophenes are those with repeat units of the general formula (I), of the general formula (II), of the general formula (III) or polythiophenes comprising combinations of these repeat units:

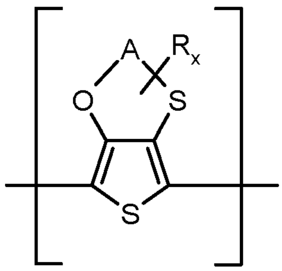

(I)

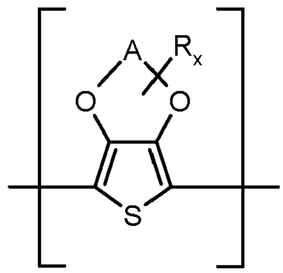

(II)

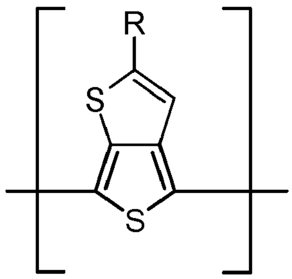

(III)

in which

A is an optionally substituted $C_1$-$C_5$-alkylene radical,

R is independently H, a linear or branched, optionally substituted $C_1$-$C_{18}$-alkyl radical, an optionally substituted $C_5$-$C_{12}$-cycloalkyl radical, an optionally substituted $C_6$-$C_{14}$-aryl radical, an optionally substituted $C_7$-$C_{18}$-aralkyl radical, an optionally substituted $C_1$-$C_4$-hydroxyalkyl radical or a hydroxyl radical,

x is an integer from 0 to 8 and,

in the case that a plurality of R radicals are bonded to A, they may be the same or different.

The general formulae (I) and (II) should be understood such that x substituents R may be bonded to the alkylene radical A.

Particular preference is given to polythiophenes with repeat units of the general formula (I) or (II) or repeat units of the general formulae (I) and (II), in which A is an optionally substituted $C_2$-$C_3$-alkylene radical and x is 0 or 1. A very

particularly preferred polythiophene is poly(3,4-ethylenedioxythiophene) (PEDOT), which is optionally substituted, as in poly(4-[(2,3-dihydrothieno[3,4-b]-[1,4]dioxin-2-yl)methoxy]propane-1-sulfonic acid), poly(4-[(2,3-dihydro-thieno[3,4-b][1,4]di-oxin-2-yl)methoxy]butane-1-sulfonic acid) (PEDOT-S) or poly(4-[(2,3-dihydro-thieno[3,4-b][1,4]dioxin-2-yl)methoxy]butane-2-sulfonic acid).

In the context of the invention, the prefix "*poly*" should be understood to mean that more than one identical or different repeat unit is present in the polymer or polythiophene. The polythiophenes contain a total of n repeat units of the general formula (I) or of the general formula (II) or of the general formula (III) or of the general formulae (I) and (II) or of the general formulae (I) and (III) or of the general formulae (II) and (III) or of the general formulae (I), (II) and (III), where n is an integer of 2 to 2000, preferably 2 to 100. The repeat units of the general formula (I) or of the general formula (II) or of the general formula (III) or the repeat units of the general formulae (I) and (II) or the repeat units of the general formulae (I) and (III) or the repeat units of the general formulae (II) and (III) or the repeat units of the general formulae (I), (II) and (III) may each be the same or different within a polythiophene. Preference is given to polythiophenes having in each case identical repeat units of the general formula (I) or of the general formula (II) or of the general formula (III) or having in each case identical repeat units of the general formulae (I) and (II), or of the general formulae (I) and (III), or of the general formulae (II) and (III), or having in each case identical repeat units of the general formulae (I), (II) and (III). Particular preference is given to polythiophenes having in each case identical repeat units of the general formula (I) or of the general formula (II) or having in each case identical repeat units of the general formulae (I) and (II). At the end groups, the polythiophenes preferably each bear H.

In the context of the invention, $C_1$-$C_5$-alkylene radicals A are preferably methylene, ethylene, n-propylene, n-butylene or n-pentylene. $C_1$-$C_{18}$-Alkyl R is preferably linear or branched $C_1$-$C_{18}$-alkyl radicals such as methyl, ethyl, n- or isopropyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethylpropyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, $C_5$-$C_{12}$-cycloalkyl radicals R are, for example, cyclopentyl, cyclohexyl, cycloheptyl, cyclooctyl, cyclononyl or cyclodecyl, $C_6$-$C_{14}$-aryl radicals R are, for example, phenyl or naphthyl, and $C_7$-$C_{18}$-aralkyl radicals R are, for example, benzyl, o-, m-, p-tolyl, 2,3-, 2,4-, 2,5-, 2,6-, 3,4-, 3,5-xylyl or mesityl. The above list serves to illustrate the invention by way of example and should not be considered to be exclusive.

In the context of the invention, any further substituents of the A radicals and/or of the R radicals include numerous organic groups, for example alkyl, cycloalkyl, aryl, aralkyl, alkoxy, halogen, ether, thioether, disulfide, sulfoxide, sulfone, sulfonate, amino, aldehyde, keto, carboxylic ester, carboxylic acid, carbonate, carboxylate, cyano, alkylsilane and alkoxysilane groups, and also carboxamide groups.

The polythiophenes may be uncharged or cationic. In preferred embodiments, they are cationic, "*cationic*" relating only to the charges which reside on the main polythiophene chain. According to the substituent on the R radicals, the polythiophenes may bear positive and negative charges in the structural unit, in which case the positive charges are on the main polythiophene chain and the negative charges are, if present, on the R radicals substituted by sulfonate or carboxylate groups. The positive charges of the main polythiophene chain may be partly or fully saturated by the anionic groups which may be present on the R radicals. Viewed overall, the polythiophenes in these cases may be cationic, uncharged or even anionic. Nevertheless, in the context of the invention, all are considered to be cationic polythiophenes, since the positive charges on the main polythiophene chain are crucial. The positive charges are not shown in the formulae, since their exact number and position cannot be stated unambiguously. The number of positive charges is, however, at least 1 and at most n, where n is the total number of all repeat units (identical or different) within the polythiophene.

The positive charge of the polythiophenes can be balanced by sulfonate- or carboxylatesubstituted and thus negatively charged R radicals (so called "self-doped polythiophenes") or by counter-ions (so called "*foreign-doped polythiophenes*").

According to a first preferred embodiment of the polythiophenes in the dispersion according to the present invention the polythiophenes are self-doped polythiophenes that preferably comprise, to the extent of at least 50 %, still more preferably to the extent of at least 75 %, still more preferably to the extent of at least 95 % and most preferably to the extent of 100 %, recurring units of the formula (IV)

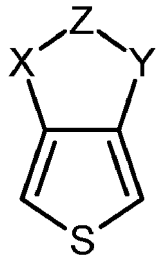

(IV)

in which

X,Y are identical or different and denote O, S, N-$R^1$, wherein $R^1$ denotes aryl, $C_1$-$C_{18}$-alkyl or hydrogen;
Z is an organic group carrying an anionic functional group, preferably a $SO_3^-$ group, wherein it is particualrly preferred that Z denotes $-(CH_2)_m-CR^2R^3-(CH_2)_n-$,
$R^2$ denotes hydrogen, $-(CH_2)_s-O-(CR4_2)_p-SO_3^-M^+$ or $-(CH_2)_p-SO_3^-M^+$,
$R^3$ denotes $-(CH_2)_s-O-(C R^4{}_2)_P-SO_3^-M^+$ or $-(CH_2)_p-SO_3^-M^+$,
$M^+$ denotes a cation,
m,n are identical or different and denote an integer from 0 to 3,
$R^4$ denotes hydrogen or a $C_1$-$C_{10}$ alkyl group, preferably a methyl group,
s denotes an integer from 0 to 10 and
p denotes an integer from 1 to 18.

The percentage figures stated above are intended in this context to express the numerical content of the units of the structural formula (IV) in the total number of monomer units in the self-doped conductive polymer.
Suitable cations $M^+$ are e.g. $H^+$, $Li^+$, $Na^+$, $K^+$, $Rb^+$, $Cs^+$ and $NH_4^+$. Particularly suitable cations are $Na^+$ and $K^+$.
Particularly preferred monomers of the structural formula (IV) are those in which

X,Y denote O,
Z denotes $-(CH_2)_m-CR^2R^3-(CH_2)_n-$,
$R^2$ denotes hydrogen or $-(CH_2)_s-O-(CH_2)_p-SO_3^-M^+$, $-(CH_2)_p-SO_3^-{}_M{}^+$ or $-(CH_2)_s-O-(CH_2)_p-CHR^4-SO_3^-M^+$,
$R^3$ denotes $-(CH_2)_s-O-(CH_2)_p-SO_3^-M^+$, $-(CH_2)_p-SO_3^-M^+$ or $-(CH_2)_s-O-(CH_2)_p-CHR^4-SO_3^-M^+$,
$M^+$ denotes a cation,
m,n are identical or different and denote an integer from 0 to 3,
$R^4$ denotes hydrogen a methyl group or an ethyl group;
s denotes an integer from 0 to 10 and
p denotes an integer from 1 to 18.

Very particularly preferred monomers of the structural formula (IV) are those in which

X,Y denote O,

Z denotes $-(CH_2)-CR^2R^3-(CH_2)_n-$,

$R^2$ denotes hydrogen,

$R^3$ denotes $-(CH_2)_s-O-(CH_2)_p-SO_3^-M^+$, $-(CH_2)_p-SO_3^-M^+$, or $-(CH_2)_s-O-(CH_2)_p-CH(CH_3)-SO_3^-M^+$ or $-(CH_2)_s-O-(CH_2)_p-CH(CH_2CH_3)-SO_3^-M^+$,

$M^+$ denotes $Na^+$ or $K^+$,

n denotes 0 or 1,

s denotes 0 or 1 and

p denotes 2, 3, 4 or 5.

Suitable Examples of self-doped polymers are disclosed in WO-A-2014/048562 and in US-A-2015/0337061. Concrete examples of very particularly preferred self-doped conductive polymers include poly(4-[(2,3-dihydrothieno[3,4-b]-[1,4]dioxin-2-yl)methoxy]propane-1-sulfonic acid), poly(4-[(2,3-dihydrothieno-[3,4-b][1,4]dioxin-2-yl)methoxy]butane-1-sulfonic acid) (PEDOT-S), poly(4-[(2,3-dihydrothieno[3,4-b][1,4]dioxin-2-yl)methoxy]butane-2-sulfonic acid) or a mixture thereof.

According to a second preferred embodiment of the polythiophenes in the dispersion according to the present invention, the polythiophenes are foreign-doped polythiophenes that preferably comprise polymeric counter-ions to balance the positive charges, the latter also being referred to hereinafter as "polyanions". Thus, according to a preferred embodiment of the dispersion according to the present invention the polythiophene is a cationic polythiophene that comprises a polyanions serving as a counter-ion for the polythiophene.

Polyanions are preferred over monomeric anions, since they contribute to film formation and, owing to their size, lead to thermally more stable, electrically conductive films. Polyanions here may, for example, be anions of polymeric carboxylic acids, such as polyacrylic acids, polymethacrylic acid or polymaleic acids, or polymeric sulfonic acids, such as polystyrenesulfonic acids and polyvinylsulfonic acids. These polycarboxylic and -sulfonic acids may also be copolymers of vinylcarboxylic and vinylsulfonic acids with other polymerizable monomers, such as acrylic esters and styrene.

A preferred polyanion is an anion of a polymeric carboxylic or sulfonic acid. A particularly preferred polyanion is the anion of polystyrenesulfonic acid (PSS) or a derivative thereof.

The molecular weight of the polyacids which afford the polyanions is preferably 1000 to 2000000, more preferably 2000 to 500000. The polyacids or alkali metal salts thereof are commercially available, for example polystyrenesulfonic acids and polyacrylic acids, or else are preparable by known processes (see, for example, Houben Weyl, Methoden der organischen Chemie [Methods of Organic Chemistry], vol. E 20 Makromolekulare Stoffe [Macromolecular Substances], part 2, (1987), p. 1141 ff.).

A concrete example of very particularly preferred foreign-doped polythiophene is a complex of poly(3,4-ethylenedioxythiophene) and an anion of polystyrenesulfonic acid (PEDOT/PSS).

Further additives

According to a preferred embodiment of the dispersion according to the invention, the dispersion further comprises at least one additive, wherein the at least one additive is an additive selected from the group consisting of a binder, a pH-regulator, a crosslinker, an adhesion promoter, a conductivity improver, a surfactant, a stabilizer and a combination of at least two of these additives.

- Suitable binders comprise organic binders which in particular are soluble in organic solvents, such as polyolefins, polyvinyl acetate, polycarbonate, polyvinyl butyral, polyacrylic acid esters, polyacrylic acid amides, polymethacrylic acid esters, polymethacrylic acid amides, polystyrene, polyacrylonitrile, polyvinyl chloride, polyvinyl pyrrolidones, polybutadiene, polyisoprene, polyethers, polyesters, polyurethanes, polyamides, polyimides, polysulphones, polysilicones, epoxy resins, styrene-acrylate, vinyl acetate/acrylate and ethylene/vinyl acetate copolymers, polyvinyl alcohols or cellulose derivatives, can also be added to the composition. Also suitable as binders are copolymers of the above-mentioned polymers.

- Suitable pH-regulators comprise the bases or acids that, for example, are described on page 4, lines 13-32 of WO 2010/003874 A2. Preferred are such additives that do not impair the film formation of the dispersion and are not volatile at relatively high temperatures, for example, at soldering temperatures, but remain within the solid electrolyte under these conditions. Particularly suitable are compounds such as the bases 2-dimethyl-aminoethanol, 2,2'-iminodiethanol or 2,2',2"-nitrilotriethanol and the acid polystyrene sulfonic acid.

- Suitable crosslinkers comprise melamine compounds, capped isocyanates, functional silanes, for example tetraethoxysilane, alkoxysilane hydrolysates for example based on tetraethoxysilane, or epoxysilanes such as 3-glycidoxypropyl trialkoxysilane.

- Suitable adhesion promoters comprise organo-functional silanes or their hydrolysates, for example, 3-glycidoxypropyltrialkoxysilane, 3-amino-propyl-triethoxysilane, 3-mercaptopropyltrimethoxysilane, 3-methacryl-oxypropyl-trimethoxysilane, vinyltrimethoxysilane or octyltriethoxysilane.

- Suitable conductivity improver comprise compounds such as for example tetrahydrofuran, lactone group-comprising compounds such as butyrolactone, valerolactone, amide group- or lactam group-comprising compounds such as caprolactam, N-methyl caprolactam, N,N-dimethyl acetamide, N-methyl acetamide, N,N-dimethyl formamide (DMF), N-methyl formamide, N-methyl formanilide, N-methyl pyrrolidone (NMP), N-octyl pyrrolidone, pyrrolidone, sulphones

and sulphoxides, such as for example sulpholane (tetramethylene sulphone), dimethyl sulphoxide (DMSO), sugar or sugar derivatives, such as for example sucrose, glucose, fructose, lactose, sugar based surfactants such as Tween or Span 60, sugar alcohols such as for example sorbitol, mannitol, furan derivatives such as for example 2-furan carboxylic acid, 3-furan carboxylic acid, and/or di- or polyalcohols such as for example ethylene glycol, glycerol, di- or triethylene glycol or polyglycerols. Ethylene glycol, diethylene glycol, triethylene glycol, polyglycerols, dimethyl sulphoxide or sorbitol are particularly preferably used as conductivity-improving additives.

- Suitable surfactants include anionic surfactants, such as e.g. alkylbenzenesulphonic acids and salts, paraffin sulphonates, alcohol sulphonates, ether sulphonates, sulphosuccinates, phosphate esters, alkyl ether carboxylic acids or carboxylates, cationic surfactants, such as e.g. quaternary alkylammonium salts, nonionic surfactants, in particular non-ionic amphiphilic surfactants, such as e.g. linear or branched alcohol ethoxylates, oxo alcohol ethoxylates, alkylphenol ethoxylates or alkyl polyglucosides. Representative examples of suitable surfactants include fluorosurfactants such as ZONYL® surfactants, including ZONYL® FSN, ZONYL® FSO, ZONYL® FSA, ZONYL® FSH (DuPont Chemicals, Wilmington, Del.), and NOVEC® (3M, St. Paul, Minn.). Other exemplary surfactants include non-ionic surfactants based on alkylphenol ethoxylates. Preferred surfactants include, for example, octylphenol ethoxylates such as TRITON®, and secondary alcohol ethoxylates such as TERGITOL® 15-S series (Dow Chemical Company, Midland Mich.). Further exemplary non-ionic surfactants include acetylenicbased surfactants, n-dodecyl β-D-maitoside and alcohol ethoxylates such as TERGITOL® TMN.

- Suitable stabilisers are those compounds which are mentioned in WO 2012/041507 A1, wherein aromatic compounds containing at least two OH groups and one further functional group with a hetero atom which differs from carbon are particularly preferred. Examples of suitable stabilizers are 3,4,5-trihydroxybenzoic acid and derivatives thereof like 3,4,5-trihydroxybenzoic acid esters (gallic acid esters), in particular alkyl esters, alkenyl esters, cycloalkyl esters, cycloalkenyl esters, aryl esters, having preferably in each case 1 to 15 C atoms in the aryl or alkyl groups of the esters, are furthermore to be mentioned. Particularly preferred are gallic acids and gallic acids esterified with sugars, which are often called tannin or gallotannins (cf. Römpp Chemie, 10th edition (1999), page 4391). Also suitable as stabilizers are the "*hydroxy-group-containing aromatic compounds*" that are mentioned in paragraph [0049] of EP 1 798 259 A1, the "*anti-oxidants*" that are mentioned in paragraph [0025] of EP 1 043 720 A1 and the "*aromatic compounds exclusive of sulfo groups and containing at least two hydroxy groups*" that are mentioned on pages 10 and 11 of WO 2008/055834 A1.

<u>Process for producing a capacitor</u>

According to a preferred embodiment of the process for the preparation of a layered body according to the present invention, the layered body is part of an electrolyte capacitor. In this case, the process comprises the steps of

A) provision of a porous electrode body made of an electrode material, wherein a dielectric layer at least partially covers a surface of this electrode material and wherein a solid electrolyte layer at least partially covers a surface of the dielectric layer;

B) application of the dispersion according to the present invention, preferably of the dispersion according to the present invention as defined in any of its $1^{st}$ to the $18^{th}$ embodiment, or of a dispersion obtainable by process 1 according to the present invention, preferably by process 1 as defined in any of its $1^{st}$ to the $7^{th}$ embodiment, onto and at least a part of the surface of the solid electrolyte layer;

C) at least partial removal of the dispersant **i)** for the formation of a polymeric outer layer that at least partially covers a surface of the solid electrolyte layer.

Process step **A)**:

In process step **A)** a porous electrode body made of an electrode material is provided, wherein a dielectric layer at least partially covers a surface of this electrode material and wherein a solid electrolyte layer at least partially covers the surface of the dielectric layer.

In principle, the porous electrode body can be manufactured in that a valve-metal powder with a high surface area is pressed and sintered to form a porous electrode body. In this context, an electrical contact wire preferably made from a valve metal, such as tantalum, is conventionally pressed into the porous electrode body. The porous electrode body is then coated with a dielectric, that is, an oxide layer, for example, by electrochemical oxidation. As an alternative, metal films can be etched and coated with a dielectric by electrochemical oxidation in order to obtain an anode film with

a porous region. In the case of a wound capacitor, an anode film with a porous region, which forms the electrode body, and a cathode film are separated by separators and wound up.

Within the scope of the invention, metals of which the oxide coatings do not allow the flow of current uniformly in both directions are understood as valve metals. With a voltage applied at the anode, the oxide layers of the valve metals block the flow of current, while in the case of a voltage applied to the cathode, considerable currents occur, which can destroy the oxide layer. The valve metals include Be, Mg, Al, Ge, Si, Sn, Sb, Bi, Ti, Zr, Hf, V, Nb, Ta and Wand an alloy or compound of at least one of these metals with other elements. The most well-known representatives of the valve metals are Al, Ta and Nb. Combinations of electrical properties comparable with a valve metal are those with metallic conductivity, which can be oxidised and of which the oxide layers provide the properties described above. For example, NbO shows metallic conductivity, but is not generally regarded as a valve metal. However, layers of oxidised NbO show the typical properties of valve-metal oxide layers, so that NbO or an alloy or compound of NbO with other elements are typical examples of such compounds with electrical properties comparable with a valve metal. Electrode materials made of tantalum, aluminium and such electrode materials which are based on niobium or niobium oxide are preferred. Tantalum is particularly preferred as an electrode material.

For the manufacture of the porous electrode body often with a porous region, the valve metals can be sintered, for example, in powdered form to provide a generally porous electrode body, or alternatively, a porous structure is imprinted onto a metallic body. The latter can be implemented, for example, by etching a film.

In the following, for the sake of simplicity, bodies with a porous region are also referred to as porous. For example, electrode bodies with a porous region are also referred to as porous electrode bodies. On the one hand, the porous bodies can be penetrated by a plurality of channels and therefore be sponge-like. This is often the case if tantalum is used in the construction of the capacitor. On the other hand, pores can be present only at the surface, and the region disposed below the surface pores can be formed in a solid manner. This is often observed, if aluminium is used in the capacitor construction.

The porous electrode bodies manufactured in this manner are then oxidised, for example in an appropriate electrolyte, for example, phosphoric acid or an aqueous solution of ammonium adipate, by applying a voltage, in order to form the dielectric. The magnitude of this forming voltage is dependent upon the oxide-layer thickness to be achieved or respectively the subsequent operating voltage of the capacitor. Preferred forming voltages lie in a range of from 1 to 1000 V, particularly preferably in a range of from 10 to 200 V, more particularly preferably in a range of from 15-100 V, more preferably in a range of from 20-50 V.

The porous electrode bodies used preferably have a porosity of 10 to 90 %, preferably of 30 to 80 %, particularly preferably of 50 to 80 %, and an average pore diameter of from 10 to 10000 nm, preferably from 50 to 5000 nm, particularly preferably from 100 to 3000 nm.

According to a special embodiment of the process according to the invention, the electrolytic capacitor to be manufactured is an aluminium wound capacitor. In this case, in process step A), a porous aluminium film as electrode material is formed anodically, whereby an aluminium-oxide coating is formed as the dielectric. The aluminium film (anode film) thus obtained is then provided with a contact wire and wound up with a further porous aluminium film (cathode film) also provided with a contact wire, whereby these two films are separated from one another by one or more separator papers, which are based, for example, on cellulose or preferably on synthetic papers. After the winding, the anode bodies obtained in this manner are fixed, for example, by means of an adhesive tape. The separator paper or papers can be carbonised by heating in an oven. This manner of manufacturing anode bodies for aluminium wound capacitors is sufficiently known from the prior art and is described, for example in US 7,497,879 B2.

For the formation of a solid electrolyte layer that at least partially covers a surface of the dielectric layer, a conductive polymer is deposited, for example by means of oxidative polymerization, on the dielectric chemically or electrochemically. To this end, precursors for preparing conductive polymers, one or more oxidizing agents, and if appropriate counter-ions are applied together or successively to the dielectric of the porous electrode body and polymerized chemically and oxidatively, or precursors for producing conductive polymers and counter-ions are polymerized by electrochemical polymerization on the dielectric of the porous electrode body.

Preferably, for the formation of a solid electrolyte layer that at least partially covers a surface of the dielectric layer a dispersion comprising a conductive polymer can be introduced into at least a part of the porous electrode body provided, wherein the dispersant is subsequently at least removed for the formation of a solid electrolyte that at least partially covers a surface of the dielectric layer.

Suitable conductive polymers for the formation of the solid electrolyte layer include polypyrroles, polythiophenes, polyanilines, polyacetylenes, polyphenylenes and poly(p-phenylene-vinylenes), wherein polythiophenes, particularly those that have already been describe above as preferred polythiophenes of the dispersion according to the present invention, are preferred. Most preferred for the formation of the solid electrolyte layer is a dispersion comprising cationic polythiophenes that are present in the form of a polythiophene/polyanion-complex, even more preferably in the form of a PEDOT/PSS-complex, self-doped polythiophenes, such as poly(4-[(2,3-dihydrothieno-[3,4-b]-[1,4]dioxin-2-yl)methoxy]propane-1-sulfonic acid), poly(4-[(2,3-dihydro-thieno-[3,4-b][1,4]-dioxin-2-yl)methoxy]butane-1-sulfonic acid) (PEDOT-S) or poly-(4-[(2,3-dihydrothieno[3,4-b][1,4]-dioxin-2-yl)methoxy]butane-2-sulfonic acid), or mixtures thereof.

Such a dispersion can be introduced into the porous region using known processes, for example, immersion, dipping, pouring, dripping, injection, spraying, spreading, painting or printing, for example, ink-jet printing, screen printing or tampon printing. The introduction is preferably carried out in that the porous electrode body is immersed in the dispersion and is accordingly impregnated with this dispersion. The immersion into or the impregnation with the dispersion is preferably implemented for a duration in a range of from 1 second to 120 min, particularly preferably in a range of from 10 seconds to 60 min and most preferably in a range of from 30 seconds to 15 min. The introduction of the dispersion into the anode body can be facilitated, for example, by increased or reduced pressure, vibration, ultrasound or heat.

After the porous electrode bodies have been impregnated with the dispersion as described above, the dispersant is at least partially removed, so that a solid electrolyte layer is formed, which covers the dielectric partially or completely. In this context, it is preferable that the covering of the dielectric by the solid electrolyte layer preferably amounts to at least 50 %, particularly preferably at least 70 % and most preferably at least 80 %, wherein the measurement of the capacitance of the capacitor in a dry and wet condition at 120°C allows a determination as described in DE-A-10 2005 043 828.

The removal of the dispersant is preferably carried out in that the porous electrode body is removed from the dispersion and is subsequently dried, wherein the drying preferably takes place at a temperature in a range from 20°C to 200°C, particularly preferably in a range from 50°C to 180°C and more preferably in a range from 80°C to 150°C. The drying conditions (i. e. drying time, drying pressure and drying temperature) are preferably adjusted to be within a range that ensures that at least 50 wt.-%, more preferably at least 75 wt.-%, even more preferably at least 90 wt.-%, even more preferably at least 95 wt.-% and most preferably at least 99 wt.-% of the total amount of the dispersant is removed when forming the solid electrolyte layer. In a particularly preferred embodiment of the process according to the present invention the drying conditions are adjusted to be within a range that ensures that the dispersant is completely removed when forming the solid electrolyte layer.

Process steps **B)** and **C)**:

In process step **B)** the dispersion according to the present invention, preferably the dispersion according to the present invention as defined in any of its 1st to the 18th embodiment, or the dispersion obtainable by process 1 according to the present invention, preferably by process 1 as defined in any of its 1st to the 7th embodiment, is applied onto at least a part of the surface of the solid electrolyte layer. In process step **C)** the dispersant **i)** is then at least partially removed for the formation of a polymeric outer layer that at least partially covers a surface of the solid electrolyte layer.

The term "*polymeric outer*" layer as used herein preferably refers to an outer layer that, although it may comprise the very same conductive polymer as the solid electrolyte layer, nevertheless differs from the solid electrolyte layer with respect to, for example, the chemical composition, the conductivity and/or a property such as the hardness, the surface roughness, the adhesion property *etc.*. The polymeric outer layer, usually having a thickness in the range from 5 to 50 μm, serves as a mechanical buffer between the capacitor anode and the cathode-side contact, preventing the cathode-side-contact to come into contact with the dielectric under mechanical stresses that may occur during the manufacture of the capacitor.

Applying the dispersion according to the present invention in process step **B)** onto at least a part of the surface of the solid electrolyte layer and the subsequent removal of the dispersant in process step **C)** can be accomplished in the same way as it has been described above in connection with the application of the dispersion used to prepare the solid electrolyte layer.

Before applying the dispersion according to the present invention onto at least a part of the surface the solid electrolyte layer in process step **B)**, it may also be advantageous to apply a crosslinker onto at least a part of the surface of the solid electrolyte layer in order to improve the coverage of the capacitor anode by the polymeric outer layer. Suitable crosslinkers and processes for their application are, for example, disclosed in DE 10 2009 007 594 A1.

Encapsulation in process step **D)**:

After a polymeric outer layer has been applied, the electrolytic capacitors can be finished, particularly encapsulated, in a manner known to the person skilled in the art. In the case of a tantalum electrolytic capacitor, the capacitor body can be coated, for example, with a graphite layer and a silver layer, as known from DE-A-10 2005 043 828, while in the case of an aluminium wound capacitor corresponding to the teaching of US 7,497,879 B2, the capacitor body is built into an aluminium cup, provided with a sealing rubber and firmly closed in a mechanical manner by flanging.

Encapsulation is preferably accomplished by sealing the capacitor body with resins, such as epoxy resins or thermoplastic resins like those disclosed in EP 0 447 165 A2. In case of an aluminium electrolytic capacitor encapsulation is preferably accomplished by providing the porous electrode body obtained in process step e) with the aluminium cup and closing it with the sealing rubber.

The features disclosed in the claims, the specification, and the drawings maybe essential for different embodiments of the claimed invention, both separately and in any combination with each other.

## DESCRIPTION OF THE DRAWINGS

The following schematic drawings show aspects of the invention for improving the understanding of the invention in connection with some exemplary illustrations.

Figure 1 shows the structure of a layer body 100 prepared by the process for the preparation of a layered structure according to the invention, for example an antistatic film, in general form. On the substrate surface of a substrate 101, in the case of an antistatic film often a PE, PP or PET layer, is an electrically conductive layer 102 that has been prepared with the composition according to the invention.

Fig. 2 shows a schematic sectional view through a part of a capacitor obtained by a particular embodiment of the process for the preparation of a layered structure according to the invention. The capacitor comprises a porous electrode body 101a comprising pores 103, made mostly from a porous electrode material 101b such as aluminium. On the surface of the electrode material 101b, a dielectric layer 101c is formed as a thin layer, so that an anode body is formed which is still porous, comprising the electrode body 101a made of the electrode material 101b and the dielectric layer 101c. On the dielectric layer 101c, there follows, optionally after further layers, a layer of a solid electrolyte 101d, so that a capacitor body is formed, comprising the electrode body 101a made of the electrode material 101b, the dielectric layer 101c and the solid electrolyte layer 101d. The solid electrolyte layer 101d is at least partially covered by a polymeric outer layer 102a (that has been prepared using the dispersion according to the present invention).

MEASUREMENT METHODS:

Solids content

An empty weighing bottle with cap (diameter 50 mm) is weighed out using an analytical balance (weight A). About 5 g of dispersion is filled into the empty weighing bottle and weighed with cap (weight B). The open weighing bottle and the cap are transferred separately to a drying cabinet and dried 15 -16 hours at 100°C.

After drying the weighing bottle is directly sealed with the cap and cooled down to room temperature with the cap on. The weighing bottle is then weighed with cap. (weight C) The measurement is repeated with a new sample a second time.

The solid content is calculated according to:

$$\text{wt.-\% solids} = (\mathbf{C} - \mathbf{A}) \times 100 / (\mathbf{B} - \mathbf{A})$$

The solid content measurement is done as two separate measurements. The two solid content measurements are allowed to differ up to a maximum of 0.03%. In case the difference is larger the measurement has to be repeated.

The final value is the average of the two single measurements.

Conductivity

For the measurement of electrical conductivity 19 g of the dispersion to be analyzed are mixed with 1 g of DMSO in a beaker and stirred for 10 min. The electrical conductivity means the inverse of the specific resistance. The specific resistance is calculated from the product of surface resistance and layer thickness of the conductive polymer layer. The surface resistance is determined for conductive polymers in accordance with DIN EN ISO 3915. The mixture of polymer dispersion and DMSO is applied as a homogeneous film by means of a spin coater to a glass substrate 50 mm × 50 mm in size which was thoroughly cleaned. The coating composition is applied to the substrate by means of a pipette to completely cover the area and spun off directly by spin coating. The spin conditions for coating compositions were 20 s at approx. 1,000 rpm in air. Thereafter, a drying process on a hot-plate was carried out (15 min at 130 °C in air). Silver electrodes of 2.0 cm length at a distance of 2.0 cm are vapor-deposited on to the polymer layer via a shadow mask. The square region of the layer between the electrodes is then separated electrically from the remainder of the layer by scratching two lines with a scalpel. The surface resistance is measured between the Ag electrodes with the aid of an ohmmeter (Keithley 614). The thickness of the polymer layer is determined with the aid of a Stylus Profilometer (Dektac 150, Veeco) at the places scratched away.

Number of particles

The number of particles is measured using an Accusizer 780 SIS (PSS NICOMP, Particle Sizing Systems, Santa Barbara, California, USA) equipped with an Accusizer 780 SIS software.

7.5 g of the dispersion to be analyzed are diluted with 742.5 g of high purity water. As a result, the concentration is diluted by a factor of 100.

The experimental parameters are set in the following way:

| | |
|---|---|
| Volume Injectables: | Large Volume |
| Number of containers: | 1 |
| Number of Pulls: | 10 |
| Volume of Pull: | 10 ml |
| Tare Volume: | 0 ml |
| Prime Volume: | 2 ml |
| Include first Pull: | Yes |

Channel settings:

| channel | diam. [μm] | max #/ml |
|---|---|---|
| 1 | 1.00 | 10,000 |
| 2 | 1.50 | 5,000 |
| 3 | 5.00 | 1,000 |
| 4 | 10.00 | 500 |
| 5 | 25 | 100 |
| 6 | 50 | 50 |
| 7 | 100 | 20 |

During the measurement the number of particles in 10 × 10 ml of the diluted dispersion are measured. The number of particles > 1.5 μm and the number of particles > 10 μm are recorded. These total numbers for these 10 × 10 ml are reported as number of particles per 1 ml of the original dispersion to be analyzed.

Determination of particle diameter (**$d_{50}$**)

The particle diameter is determined as disclosed by H. G. Müller in Colloid Polym. Sci. 267, 1113-1116 (1989). The $d_{50}$ value of the diameter distribution states that 50% of the total weight of all particles of the conductive polymer in the dispersion can be assigned to those particles which have a diameter of less than or equal to the **$d_{50}$**-value.

Surface roughness

A glass substrate 50 mm × 50 mm in size was thoroughly cleaned and UV-ozone treated. The dispersion to be analysed is applied as a homogeneous film by means of a spin coater. The spin conditions for coating compositions were 20 s at approx. 1,000 rpm in air. Thereafter, a drying process on a hot-plate was carried out (10 min at 130 °C in air). The surface roughness was measured using a Stylus Profilometer (Dektac 150, Veeco). The scan was taken over a length of 1000 μm at a scan speed of 66.7 μm/sec employing a stylus with a diameter of 5 μm and a stylus force of 7 μg. The surface roughness Rq is the root mean square average of profile hight deviations from the mean line. Rq is defined in accordance with ISO 4287:1998 + AC 2008.

Leakage current measurement

The leakage current (DCL) was determined 3 minutes after application of a 20 V voltage using a Keithley 199 multimeter. The leakage current of 5 capacitors was measured and the average leakage current (DCL) value was

determined.

Average

If not otherwise mentioned, the average corresponds to the arithmetical average value.

EXAMPLES

Example 1

A 3L stainless steel reactor was used, which was equipped with a stirrer, a vent, a material inlet at the top, an internal thermometer, an ultra-turrax, a material outlet at the bottom and a temperature jacket that was connected to a thermostat. The reactor was initially charged with 2,186 g of deionized water and 102 g of an aqueous polystyrenesulphonic acid solution (Mw 70,000 g/mol; solids content of 25% by weight; total PSS solids 25.5g). The reaction temperature was kept at 10°C throughout the reaction. The mixture was flushed with nitrogen for 3 h. Subsequently the mixture was evacuated to 33 hPas. With running stirrer and ultra-turrax 10.2 g of 3,4-ethylenedioxythiophene (71.8 mmol) were added. The solution was mixed for 30 minutes. Subsequently, 0.06 g of iron(III) sulphate and 19.0 g of sodium persulphate (79.8 mmol) dissolved in 50 g of water were added through the material inlet and the solution was stirred and dispersed for a further 23 h at reduced pressure.

After 23 h the reactor was brought to atmospheric pressure. The dispersion was transferred to a 3L beaker. The inorganic salts were removed by adding 290 ml of a cation exchanger (Lewatit S108H, Lanxess AG) and 500 ml of an anion exchanger (Lewatit MP 62, Lanxess AG) to the dispersion. The mixture was stirred for 2h. The ion-exchange resin was removed using a 400 μm filter sieve (E-D-Schnellsieb mittel 400my; Drefi Drehkopf &FIDI GmbH; Germany). This dispersion is called "dispersion **1**".

Dispersion **1** was filtered using a 125 μm filter sieve (E-D-Schnellsieb super fein 125my; Drefi Drehkopf &FIDI GmbH; Germany). The resulting "dispersion **1A**" showed the following properties:

Solids content: 1.2 wt.-%

Dispersion **1A** was then additionally filtered using a 10 μm filter (Pall DFA4001J100) at a pressure of 0.3 bar. The resulting dispersion showed the following properties:

Condutivity: 534 S/cm

80 g of the dispersion filtered through the 10 μm filter, 3 g of a sulpho-polyester (Eastek 1100, Eastman) and 4 g of dimethylsulphoxide were mixed intensively for one hour in a glass beaker with a stirrer. The properties of resulting "dispersion **1B**" (according to the invention) are summarized in Table 1.

Example 2

A dispersion identical to dispersion **1A** was prepared. 300 g of the dispersion were filtered using a 4.5 μm Filter (Pall DFA4001J045) at a pressure of 3 bar. The resulting "dispersion **2A**" showed the following properties:

Condutivity: 523 S/cm

80 g of dispersion **2A**, 3 g of a sulpho-polyester (Eastek 1100, Eastman) and 4 g of dimethylsulphoxide were mixed intensively for one hour in a glass beaker with a stirrer. The properties of "dispersion **2B**" (according to the invention) are summarized in Table 1.

Example 3

300 g of dispersion **1A** was placed in a beaker. The beaker was placed in a water/ice-bath. An Ultra-Turrax (IKA T 25 basic) was placed into the dispersion and stirred at 6500 rpm for 1 h. The resulting dispersion was filtered using a 4.5 μm Filter (Pall DFA4001J045) at a pressure of 1.5 bar. The resulting dispersion is called "dispersion **3A**".

80 g of dispersion **3A**, 3 g of a sulpho-polyester (Eastek 1100, Eastman) and 4 g of dimethylsulphoxide were mixed intensively for one hour in a glass beaker with a stirrer. The properties of "dispersion **3B**" (according to the

invention) are summarized in Table 1.

Example 4

A dispersion identical to dispersion **1A** was prepared. 500 g of the dispersion were homogenized once using a high-pressure homogenizer run at 1500 bar. The dispersion was then filtered using a 4.5 μm filter (Pall DFA4001J045) at a pressure of 1.0 bar. The resulting "dispersion **4A**" showed the following properties:

Conductivity: 530 S/cm

80 g of dispersion **4A**, 3 g of a sulpho-polyester (Eastek 1100, Eastman) and 4 g of dimethylsulphoxide were mixed intensively for one hour in a glass beaker with a stirrer.
The properties of "dispersion **4B**" (not according to the invention) are summarized in Table 1.

Example 5

A dispersion identical to dispersion **1A** was prepared. The dispersion was homogenized 10 times using a high-pressure homogenizer run at 1500 bar. 2,000 g of the dispersion were filtered using a 4.5 μm filter (Pall DFA4001J045) at a pressure of 1.0 bar. The resulting dispersion is called "dispersion **5A**".
80 g of dispersion **5A**, 3 g of a sulpho-polyester (Eastek 1100, Eastman) and 4 g of dimethylsulphoxide were mixed intensively for one hour in a glass beaker with a stirrer. The properties of "dispersion **5B**" (not according to the invention) are summarized in Table 1.

Example 6

A dispersion identical to dispersion **1** was prepared.
80 g of this dispersion, 3 g of a sulpho-polyester (Eastek 1100, Eastman) and 4 g of dimethylsulphoxide were mixed intensively for one hour in a glass beaker with a stirrer. The properties of "dispersion **6B**" (not according to the invention) are summarized in Table 1.

Example 7

44 g of dispersion **5B** are mixed with 6 g of dispersion **6B**. This mixture is called "dispersion **7B**". The properties of dispersion **7B** (according to the invention) are summarized in Table 1.

Example 8

2.5 L or water were placed in a 5 L round-bottomed-flask equipped with stirrer and thermometer. 214.2 g p-toluenesulfonic acid monohydrate and 2.25 g of iron(III) tosylate were added and stirred for 30 min at room temperature. Then 85.8 g ethylene dioxythiophene were added and stirred for 30 min. Subsequently, 192.9 g sodium peroxodisulfate was added under stirring. The mixture was stirred for further 24 h at room temperature. The resulting PEDOT/tosylate powder was collected on a porcelain suction filter and washed with 3 L of de-ionized water. The powder was then dried for 6 h at 100°C. 89 g of a black PEDOT/toslylate powder were obtained.
1 g of PEDOT/tosylate powder was mixed with 99 g of dispersion 5A for 30 min.
80 g of this dispersion, 3 g of a sulpho-polyester (Eastek 1100, Eastman) and 4 g of dimethylsulphoxide were mixed intensively for one hour in a glass beaker with a stirrer. This mixture is called dispersion **8B**. The properties of dispersion **8B** (not according to the invention) are summarized in Table 1.

Example 9

0.25 g of PEDOT/tosylate powder as prepared in Example 8 were mixed with 99.75 g of dispersion 1A for 30 min. 80 g of this dispersion, 3 g of a sulpho-polyester (Eastek 1100, Eastman) and 4 g of dimethylsulphoxide were mixed intensively for one hour in a glass beaker with a stirrer. This mixture is called "dispersion **9B**". The properties of dispersion **9B** (not according to the invention) are summarized in Table 1.

Example 10

46 g of dispersion **5B** are mixed with 4 g of dispersion **6B**. This mixture is "dispersion **10B**". The properties of dispersion **10B** (according to the invention) are summarized in Table 1

Example 11

A dispersion identical to dispersion 1A was prepared. 100 g of the dispersion were filtered using a 25 μm filter mesh (Schwegmann Filtrations-Technik; Polyamid Monofilament 25μm).

80 g of the resulting dispersion, 3 g of a sulpho-polyester (Eastek 1100, Eastman) and 4 g of dimethylsulphoxide were mixed intensively for one hour in a glass beaker with a stirrer. This dispersion is called "dispersion **11B**". The properties of "dispersion **11B**" (according to the invention) are summarized in Table 1.

Example 12

60 g of dispersion **11B** are mixed with 30 g of dispersion **1B**. This mixture is "dispersion **12B**". The properties of dispersion **12B** (according to the invention) are summarized in Table 1

Example 13

300 g of dispersion identical to dispersion **3A** were prepared. The dispersion was passed twice over a 4.5 μm Filter (Pall DFA4001J045) at a pressure of 1.4 bar. The resulting dispersion is called "dispersion **13A**".

80 g of the resulting dispersion, 3 g of a sulpho-polyester (Eastek 1100, Eastman) and 4 g of dimethylsulphoxide were mixed intensively for one hour in a glass beaker with a stirrer. This dispersion is called "dispersion **13B**". The properties of "dispersion **13B**" (according to the invention) are summarized in Table 1.

Table 1 summarizes the results of Examples 1 to 13:

| Example | 1st filtration filter sieve [μm] | 2nd filtration filter sieve [μm] | pressure at 2nd filtration [bar] | surfaces roughness Rq [nm] | par -ticles > 1.5 μm [per ml] | particles > 10 μm [per ml] | conductivity [S/cm] |
|---|---|---|---|---|---|---|---|
| 1B (i.) | 250 | 10 | 0.3 | 7.2 | 532,006 | 15,672 | 255 |
| 2B (i.) | 250 | 4.5 | 3 | 6.2 | 169,834 | 11,398 | 260 |
| 3B (i.) | 250 | 4.5 | 1.5 | 4.8 | 42,458 | 9,878 | 251 |
| 4B (n. i.) | 250 | 4.5 | 1 | 3.8 | 18,483 | 2,105 | 248 |
| 5B (n. i.) | 250 | 4.5 | 1 | 2.3 | 6,549 | 604 | 262 |
| 6B (n. i.) | none | none | none | 10.5 | 1,040,458 | 45,721 | 256 |
| 7B (i.) | none | none | none | 5.2 | 145,289 | 10,538 | 254 |
| 8B (n. i.) | none | none | none | 27 | 2,136,065 | 83,478 | 246 |
| 9B (n. i.) | none | none | none | 24 | 51,825 | 21,451 | 236 |
| 10B (i.) | none | none | none | 4.5 | 97,589 | 9,145 | 250 |
| 11B (i.) | 250 | 25 | none | 20.1 | 967,428 | 21,489 | 245 |
| 12B (i.) | 250 | - | - | 18.7 | 880,567 | 20,564 | 248 |
| 13B (i.) | 250 | 4.5 | 1.4 | 4.4 | 128,636 | 2,591 | 240 |
| i. = according to the invention; n. i. = non according to the invention | | | | | | | |

Example 14

Process for preparation of capacitors

Process step **A)**:

Tantalum powder having a specific capacitance of 50,000 CV/g was pressed to pellets with inclusion of a tantalum wire and sintered in order to form a porous electrode body having dimensions of 1.5 mm × 2.9 mm × 4.0 mm. The porous electrode bodies were anodized in a phosphoric acid electrolyte at 30 V to form a dielectric, in order to obtain capacitor bodies.

The capacitor bodies of process step were impregnated with an aqueous poly(3,4-ethylenedioxythiophene)/polystyrenesulphonate solution (Clevios K Nano LV, Heraeus Deutschland) for 1 min. Thereafter, drying was carried out at 120 °C for 10 min. The impregnation and drying were carried out nine further times to obtain a solid electrolyte layer based on PEDOT/PSS.

Process steps **B)** and **C)**:

An outer polymer layer on the capacitor bodies was obtained by process step **B)** and **C)**. In process step **B)** the capacitor bodies of process step **A)** were impregnated in a crosslinker agent solution (Clevios K Primer W15, Heraeus Deutschland). Thereafter, drying was carried out at 120 °C for 10 min. Subsequently, the capacitor bodies were impregnated in the dispersion **1B** of Example 1. Thereafter, in process step **C)** drying was carried out at 120 °C for 10 min.

The capacitor bodies of process step **C)** were then covered with a graphite layer and thereafter with a silver layer in order to obtain the finished capacitors in this way.

The average leakage current of the capacitors (according to the invention) is given in Table 2.

Example 15

Capacitors were produced and evaluated the same way as in Example 14, however, dispersion **2B** of Example 2 was used instead of dispersion **1B** of Example 1 in process step **B)**. The average leakage current of the capacitors (according to the invention) is given in Table 2.

Example 16

Capacitors were produced and evaluated the same way as in Example 14, however, dispersion **3B** of Example 3 was used instead of dispersion **1B** of Example 1 in process step **B)**. The average leakage current of the capacitors (according to the invention) is given in Table 2.

Example 17

Capacitors were produced and evaluated the same way as in Example 14, however, dispersion **4B** of Example 4 was used instead of dispersion **1B** of Example 1 in process step **B)**. The average leakage current of the capacitors (not according to the invention) is given in Table 2.

Example 18

Capacitors were produced and evaluated the same way as in Example 14, however, dispersion **5B** of Example 5 was used instead of dispersion **1B** of Example 1 in process step **B)**. The average leakage current of the capacitors (not according to the invention) is given in Table 2.

Example 19

Capacitors were produced and evaluated the same way as in Example 14, however, dispersion **6B** of Example 6 was used instead of dispersion **1B** of Example 1 in process step **B)**. The average leakage current of the capacitors (not according to the invention) is given in Table 2.

Example 20

Capacitors were produced and evaluated the same way as in Example 14, however, dispersion **7B** of Example

7 was used instead of dispersion **1B** of Example 1 in process step **B)**. The average leakage current of the capacitors (according to the invention) is given in Table 2.

Example 21

Capacitors were produced and evaluated the same way as in Example 14, however, dispersion **8B** of Example 8 was used instead of dispersion **1B** of Example 1 in process step **B)**. The average leakage current of the capacitors (not according to the invention) is given in Table 2.

Example 22

Capacitors were produced and evaluated the same way as in Example 14, however, dispersion **9B** of Example 9 was used instead of dispersion **1B** of Example 1 in process step **B)**. The average leakage current of the capacitors (not according to the invention) is given in Table 2.

Example 23

Capacitors were produced and evaluated the same way as in Example 14, however, dispersion **10B** of Example 10 was used instead of dispersion **1B** of Example 1 in process step **B)**. The average leakage current of the capacitors (according to the invention) is given in Table 2.

Example 24

Capacitors were produced and evaluated the same way as in Example 14, however, dispersion **11B** of Example 11 was used instead of dispersion **1B** of Example 1 in process step **B)**. The average leakage current of the capacitors (according to the invention) is given in Table 2.

Example 25

Capacitors were produced and evaluated the same way as in Example 14, however, dispersion **12B** of Example 12 was used instead of dispersion **1B** of Example 1 in process step B). The average leakage current of the capacitors (according to the invention) is given in Table 2.

Example 26

Capacitors were produced and evaluated the same way as in Example 14, however, dispersion 13B of Example 13 was used instead of dispersion **1B** of Example 1 in process step **B)**. The average leakage current of the capacitors (according to the invention) is given in Table 2.

Table 2 summarizes the results of Examples 9 to 16:

| Example | dispersion | number of particles > 1.5 μm per ml | number of particles > 10 μm per ml | Surface roughness Rq [nm] | leakage current [μA] |
|---|---|---|---|---|---|
| 14 (i.) | **1B** | 532,006 | 15,672 | 7.2 | 11 |
| 15 (i.) | **2B** | 169,834 | 11,398 | 6.2 | 12 |
| 16 (i.) | **3B** | 42,458 | 9,878 | 4.8 | 18 |
| 20 (i.) | **7B** | 115,289 | 10,538 | 5.2 | 13 |
| 23 (i.) | **10B** | 97,589 | 9,145 | 4.5 | 17 |
| 24 (i.) | **11B** | 967,428 | 21,489 | 20.1 | 19 |
| 25 (i.) | **12B** | 880,567 | 20,564 | 18.7 | 15 |
| 26 (i.) | **13B** | 128,636 | 2,591 | 4.4 | 13 |
| 17 (n. i.) | **4B** | 18,483 | 2,105 | 3.8 | 28 |
| 18 (n. i.) | **5B** | 6,549 | 604 | 2.3 | 57 |

(continued)

| Example | dispersion | number of particles > 1.5 μm per ml | number of particles > 10 μm per ml | Surface roughness Rq [nm] | leakage current [μA] |
|---|---|---|---|---|---|
| 19 (n. i.) | **6B** | 1, 040,458 | 45,721 | 10.5 | 35 |
| 21 (n. i.) | **8B** | 2,136,065 | 83,478 | 27 | 32 |
| 22 (n. i.) | **9B** | 512,825 | 21,451 | 24 | 26 |
| i. = according to the invention; n. i. = non according to the invention | | | | | |

**KEY TO REFERENCE NUMBERS**

100 layered body
101 substrate
101a porous electrode body
101b electrode material
101c dielectric
101d solid electrolyte layer
102 electrically conductive layer
102a polymeric outer layer
103 pores

**Claims**

**1.** A dispersion comprising

i) a dispersant;
ii) at least one polythiophene dispersed in the dispersant **i)**;

wherein the dispersion comprises particles that have a particle size of 1.5 μm or more, the total number of these particles being in the range from 20,000 to 1,000,000 per ml; and
wherein a conductive layer prepared from the dispersion has a surface roughness Rq in the range from 4 to 23 nm.

**2.** The dispersion according to claim 1,

wherein the dispersion comprises 100,000 to 900,000 particles per ml that have a particle size of 1.5 μm or more; and
wherein a conductive layer prepared from the dispersion has a surface roughness Rq in the range from 4 to 10 nm.

**3.** The dispersion according to claim 1 or 2, wherein the dispersion comprises more than 1,500 particles per ml that have a particle size of 10 μm or more.

**4.** The dispersion according to any one of claims 1 to 3, wherein the dispersant **i)** comprises water.

**5.** The dispersion according to any of claims 1 to 4, wherein the polythiophene is present in the form of particles of a complex comprising the polythiophene and a polyanion.

**6.** The dispersion according to claim 5, wherein the polythiophene is poly(3,4-ethylenedioxythiophene) and wherein the polyanion is an anion of polystyrene sulfonic acid.

**7.** The dispersion according to claim 5 or 6, wherein the weight average diameter (**$d_{50}$**) of particles of the complex comprising a polythiophene and a polyanion is in the range from 10 nm to 500 nm.

**8.** The dispersion according to any of claims 1 to 7, wherein a conductive layer prepared from the dispersion has a conductivity of at least 10 S/cm as determined by the test method disclosed herein.

**9.** The dispersion according to any one of claims 1 to 8, wherein the polythiophene is present in the form of particles of a complex comprising the polythiophene and a polyanion and wherein the number and the size of the particles defined in claims 1, 2 and 3 refers to the number and the size of the particles of a complex comprising the polythiophene and a polyanion.

**10.** The dispersion according to any of claims 1 to 8, wherein the dispersion has a solids content of at least 1 wt.-%, based on the total weight of the dispersion.

**11.** A process for the preparation of a layered body (100), comprising the process steps:

**A)** provision of a substrate (101);
**B)** application of the dispersion according to any of claims 1 to 10 onto at least a part of the surface of this substrate (101);
**C)** at least partial removal of the dispersant **i)** to obtain a layered body (100) comprising an electrically conductive layer (102) coated onto at least a part of the surface of the substrate (101).

**12.** The process according to claim 11, wherein the layered body (100) is part of a solid electrolyte capacitor, wherein the substrate (101) is a porous electrode body (101a) made of an electrode material (101b), wherein a dielectric layer (101c) at least partially covers a surface of this electrode material (101b), wherein a solid electrolyte layer (101d) at least partially covers a surface of the dielectric layer (101c) and wherein the electrically conductive layer (102) is a polymeric outer layer (102a) that at least partially covers a surface of the solid electrolyte layer (101d).

**13.** The process according to claim 12, wherein the process comprises the steps of:

**A)** provision of a porous electrode body (101a) made of an electrode material (101b), wherein a dielectric layer (101c) at least partially covers a surface of this electrode material (101b) and wherein a solid electrolyte layer (101d) at least partially covers a surface of the dielectric layer (101c);
**B)** application of the dispersion according to any of claims 1 to 10 onto at least a part of the solid electrolyte layer (101d);
**C)** at least partial removal of the dispersant **i)** for the formation of a polymeric outer layer (102a) that at least partially covers a surface of the solid electrolyte layer(101d).

**14.** A layered body, obtainable by the process according to any of claims 11 to 13.

**15.** Use of the dispersion according to any of claims 1 to 10 for the formation of a polymeric outer layer in a capacitor.

Fig. 1

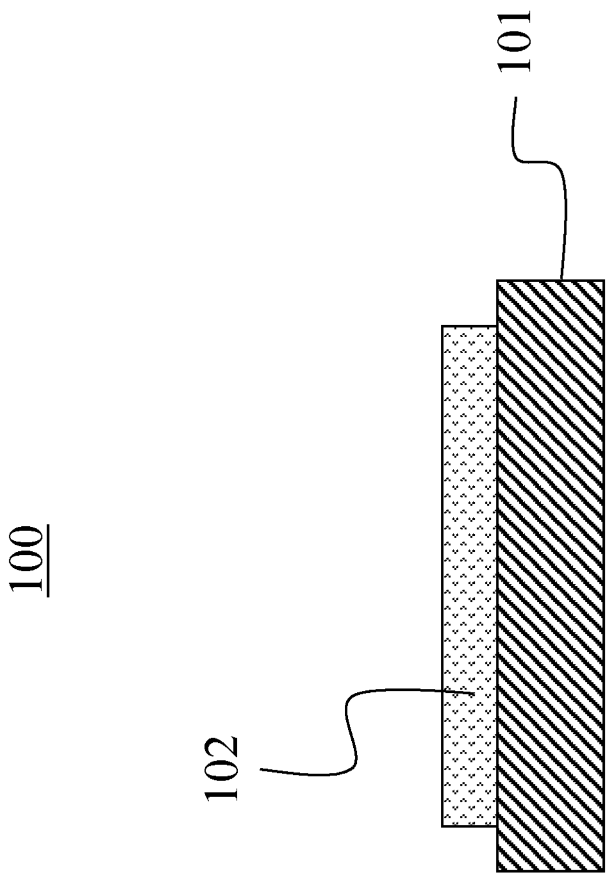

Fig. 2

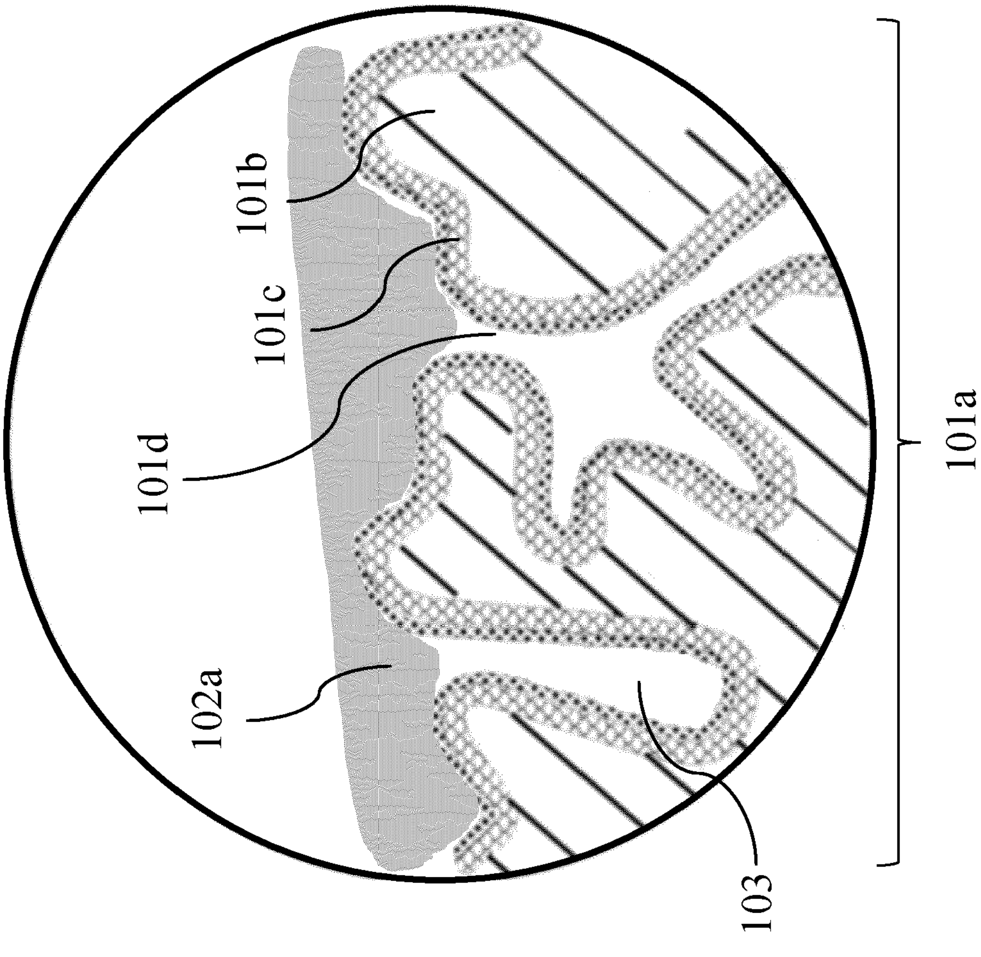

Europäisches Patentamt
European Patent Office
Office européen des brevets

# EUROPEAN SEARCH REPORT

Application Number
EP 23 17 3782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2004/260016 A1 (LOUWET FRANK [BE] ET AL) 23 December 2004 (2004-12-23)<br>* paragraphs [0008], [0022], [0085], [0086], [0105], [0114], [0116]; tables 13,14 * | 1-7,9, 10,12-15<br>8 | INV.<br>H01G9/00<br>H01G9/028<br><br>ADD.<br>H01G9/042<br>H01G9/15<br>C08G61/12<br>H01B1/12<br>H01G11/48 |
| X<br>A | US 2003/211331 A1 (LOUWET FRANK [BE] ET AL) 13 November 2003 (2003-11-13)<br>* paragraph [0019]; tables 16,20 * | 1,8<br>2-7,9-15 | |
| A | JP 5 216320 B2 (E. I. DU PONT DE NEMOURS AND COMPANY) 19 June 2013 (2013-06-19)<br>* the whole document * | 1-15 | |
| A | KR 2006 0010756 A (DU PONT [US]) 2 February 2006 (2006-02-02)<br>* the whole document * | 1-15 | |
| | | | TECHNICAL FIELDS SEARCHED (IPC) |
| | | | H01G |

The present search report has been drawn up for all claims

| Place of search | Date of completion of the search | Examiner |
|---|---|---|
| Munich | 24 October 2023 | El-Sayed, Tassem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 3782

This annex lists the patent family members relating to the patent documents cited in the above-mentioned European search report. The members are as contained in the European Patent Office EDP file on
The European Patent Office is in no way liable for these particulars which are merely given for the purpose of information.

24-10-2023

| Patent document cited in search report | Publication date | Patent family member(s) | Publication date |
|---|---|---|---|
| US 2004260016 A1 | 23-12-2004 | US 2004260016 A1 | 23-12-2004 |
| | | US 2008017833 A1 | 24-01-2008 |
| US 2003211331 A1 | 13-11-2003 | AU 2002349041 A1 | 17-06-2003 |
| | | AU 2002350722 A1 | 17-06-2003 |
| | | CN 1599766 A | 23-03-2005 |
| | | DE 60219197 T2 | 03-01-2008 |
| | | DE 60226067 T2 | 25-06-2009 |
| | | EP 1453877 A1 | 08-09-2004 |
| | | EP 1453878 A1 | 08-09-2004 |
| | | JP 4049744 B2 | 20-02-2008 |
| | | JP 4251451 B2 | 08-04-2009 |
| | | JP 2005511808 A | 28-04-2005 |
| | | JP 2005511809 A | 28-04-2005 |
| | | KR 20050044681 A | 12-05-2005 |
| | | KR 20050058270 A | 16-06-2005 |
| | | US 2003211331 A1 | 13-11-2003 |
| | | US 2003215571 A1 | 20-11-2003 |
| | | US 2005245723 A1 | 03-11-2005 |
| | | WO 03048227 A1 | 12-06-2003 |
| | | WO 03048228 A1 | 12-06-2003 |
| JP 5216320 B2 | 19-06-2013 | CN 1972979 A | 30-05-2007 |
| | | EP 1730212 A1 | 13-12-2006 |
| | | JP 5216320 B2 | 19-06-2013 |
| | | JP 2007529610 A | 25-10-2007 |
| | | KR 20070004849 A | 09-01-2007 |
| | | KR 20120006090 A | 17-01-2012 |
| | | TW I378957 B | 11-12-2012 |
| | | US 2005209388 A1 | 22-09-2005 |
| | | WO 2005090436 A1 | 29-09-2005 |
| KR 20060010756 A | 02-02-2006 | EP 1615971 A2 | 18-01-2006 |
| | | KR 20060010756 A | 02-02-2006 |
| | | US 2004254297 A1 | 16-12-2004 |
| | | US 2008248314 A1 | 09-10-2008 |
| | | WO 2004094501 A2 | 04-11-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102005033839 A
- WO 2014048562 A
- US 20150337061 A
- WO 2010003874 A2
- WO 2012041507 A1
- EP 1798259 A1
- EP 1043720 A1
- WO 2008055834 A1
- US 7497879 B2
- DE 102005043828 A
- DE 102009007594 A1
- EP 0447165 A2


### Non-patent literature cited in the description


- Römpp Chemie. 1999, 4391
- **H. G. MÜLLER.** *Colloid Polym. Sci.,* 1989, vol. 267, 1113-1116